# EUROPÄISCHE PATENTANMELDUNG

(11) **EP 2 693 077 A2**
(43) Veröffentlichungstag der Anmeldung: **05.02.2014**
(21) Anmeldenummer: 13175835.1
(22) Anmeldetag: 10.07.2013
(51) Int. Cl.: F16F 15/123

(54) **Drehschwingungstilger**

(30) Priorität: 01.08.2012 DE 102012213529
(71) Anmelder: Schaeffler Technologies AG & Co. KG, 91074 Herzogenaurach (DE)
(72) Erfinder: Movlazada, Dr. -Ing. Parviz, 76437 Rastatt (DE); Kombowski, Eugen, 76316 Malsch (DE)

(57) **Zusammenfassung**

Ein Drehschwingungstilger (100) umfasst eine Eingangsseite (105) und eine Ausgangsseite (110) mit einer gemeinsamen Drehachse (115) und ein erstes (120) und ein zweites (130) elastisches Element zur Übertragung von Kräften in Umfangsrichtung zwischen der Eingangsseite und der Ausgangsseite, wobei die elastischen Elemente auf unterschiedlichen Wirkradien (125,135) liegen. Dabei sind beide elastischen Elemente jeweils mittels eines radial außen liegenden Anlageelements (140,145,150,155) gehalten.

## Beschreibung

Die Erfindung betrifft einen Drehschwingungstilger. Insbesondere betrifft die Erfindung einen Drehschwingungstilger mit zwei elastischen Elementen, die auf unterschiedlichen Wirkradien angeordnet sind.

Ein Drehschwingungstilger kann in einem Antriebsstrang eingesetzt werden, um Drehschwingungen, die insbesondere von einem ungleichförmig abgegebenen Drehmoment eines Antriebsmotors herrühren können, zwischen dem Antriebsmotor und einem Getriebe übermitteln. Der Drehschwingungstilger umfasst eine Eingangs- und eine Ausgangsseite, zwischen denen eines oder mehrere elastische Elemente auf einem Umfang um eine Drehachse angeordnet sind, so dass ein Drehmomentfluss durch die elastischen Elemente erfolgt und die elastischen Elemente Schwankungen im übertragenen Drehmoment abbauten können.

DE 10 2011 087 242 zeigt einen Torsionsschwingungsdämpfer mit zwei elastischen Elementen, die zueinander axial versetzt sind.

In einer anderen Bauform können die elastischen Elemente auf unterschiedlichen Wirkradien angebracht sein, so dass sie radial versetzt sind. Diese Bauform erfordert weniger axialen Platz und kann einen zur Verfügung stehenden Bauraum verbessert ausnutzen.

Die elastischen Elemente werden tangential bzw. entlang eines Umfangs um die Drehachse belastet. Um zu verhindern, dass ein mittlerer Abschnitt eines elastischen Elements unter dem Einfluss von Fliehkraft nach außen getrieben wird, ist es erforderlich, das elastische Element radial außen abzustützen. Je nach Größe und Bauform des elastischen Elements sind unterschiedliche Abstützelemente im Stand der Technik bekannt.

Der Erfindung liegt die Aufgabe zugrunde, einen Drehschwingungsdämpfer mit radial zueinander versetzten elastischen Elementen anzugeben, bei dem die elastischen Elemente auf einfache und sichere Art gehalten sind.

Die Erfindung löst diese Aufgabe mittels eines Drehschwingungstilgers mit den Merkmalen des unabhängigen Anspruchs. Unteransprüche geben bevorzugte Ausführungsformen wieder. Ein erfindungsgemäßer Drehschwingungstilger umfasst eine Eingangsseite und eine Ausgangsseite mit einer gemeinsamen Drehachse sowie ein erstes und ein zweites elastisches Element zur Übertragung von Kräften in Umfangsrichtung zwischen der Eingangsseite und der Ausgangsseite. Dabei liegen die elastischen Elemente auf unterschiedlichen Wirkradien und beide elastischen Elemente sind jeweils mittels eines radial außen liegenden Anlageelements gehalten.

Das radial außen liegende Anlageelement kann insbesondere ein bogen- schüssel- oder wulstförmig ausgeformtes Blech sein, das im Stand der Technik als "Retainer" bekannt ist. Durch die Anlageelemente können beide Federelemente sicher am Drehschwingungstilger gehalten sein. Eine Feder- bzw. Übertragungskennlinie des Drehschwingungstilgers kann so in einem breiten Drehzahlband vorbestimmt sein. Die elastischen Elemente können als Bogenfedern ausgelegt sein, wodurch ein vergrößerter Federweg zwischen der Eingangsseite und der Ausgangsseite ermöglicht sein kann.

In einer bevorzugten Ausführungsform ist das am ersten elastischen Element radial außen anliegende Anlageelement als Teil einer Zwischenscheibe ausgebildet, die das erste elastische Element mit dem zweiten elastischen Element verbindet. Die Zwischenscheibe kann kostengünstig herstellbar sein und die Stabilität der Zwischenscheibe kann trotz geringer radialer und axialer Bauraumerfordernisse hoch sein. Durch die beschriebene Zwischenscheibe kann eine Gesamtanzahl von Bauteilen, insbesondere Blechen, am Drehschwingungstilger reduziert sein. Ferner kann eine Herstellung durch eine Verringerung von Verbindungsstellen, insbesondere Nietverbindungen, erleichtert sein.

In einer besonders bevorzugten Ausführungsform umfasst die Zwischenscheibe ein Eingriffselement zur Anlage am zweiten elastischen Element in Umfangsrichtung. Auf diese Weise kann das Zwischenblech eine Doppelfunktion eines radialen Anlageelements und eines Übertragungselements für Kräfte in Umfangsrichtung erfüllen. Der resultierende Drehschwingungstilger kann so kompakter, leichter und belastbarer ausgelegt sein.

In einer alternativen Ausführungsform kann das am zweiten elastischen Element radial außen anliegende Anlageelement als Teil der Zwischenscheibe ausgebildet sein. Anders ausgedrückt kann die Zwischenscheibe so geformt sein, dass sie einen Retainer für beide elastische Elemente bildet. Der Aufbau des Drehschwingungstilgers mit zwei Retainern kann so besonders einfach und kostengünstig ermöglicht sein.

In unterschiedlichen Ausführungsformen kann die Zwischenscheibe bezüglich der Drehachse zentriert sein. Die zentrierte Lagerung kann insbesondere eine Drehzahlfestigkeit des Drehschwingungstilgers verbessern. In einer Ausführungsform ist die Zwischenscheibe schwimmend gelagert, kann also innerhalb vorbestimmter Grenzen axial bezüglich der Drehachse bewegt werden.

Das am zweiten elastischen Element anliegende Anlageelement kann als Teil einer drehfest mit der Eingangs- oder Ausgangsseite verbundenen Eingangs- bzw. Ausgangsscheibe ausgebildet sein. So ist es möglich, den erfindungsgemäßen Drehschwingungstilger mit einer geringen Anzahl von Blechen kostengünstig aufzubauen.

In unterschiedlichen Ausführungsformen können die elastischen Elemente alternativ parallel oder in Serie zwischen der Eingangsseite und der Ausgangsseite angeordnet sein. Dadurch kann der erfindungsgemäße Drehschwingungstilger mit erhöhter Flexibilität an unterschiedliche Aufgaben anpassbar sein. Die Vorzüge beider alternativer Anordnung können zusammen mit der vorliegenden Erfindung nutzbar sein.

In einer bevorzugten Ausführungsform kann der Drehschwingungstilger ferner ein Fliehkraftpendel umfassen. Im Verbund mit den beiden elastischen Elementen kann eine schwingungstilgende Wirkung des Fliehkraftpendels mit der schwingungstilgenden Wirkung der elastischen Elemente vorteilhaft verbunden sein.

Die Erfindung wird nun mit Bezug auf die beigefügten Figuren genauer beschrieben, in denen:
Figur 1 einen Drehschwingungstilger mit zwei elastischen Element in serieller Anordnung;
Figur 2 einen Drehschwingungstilger mit zwei elastischen Elementen in paralleler Anordnung;
Figur 3 einen Drehschwingungstilger mit einem Fliehkraftpendel;
Figur 4 einen Drehschwingungstilger mit einer Turbine;
Figur 5 einen Drehschwingungstilger in einer weiteren Ausführungsform
darstellt.

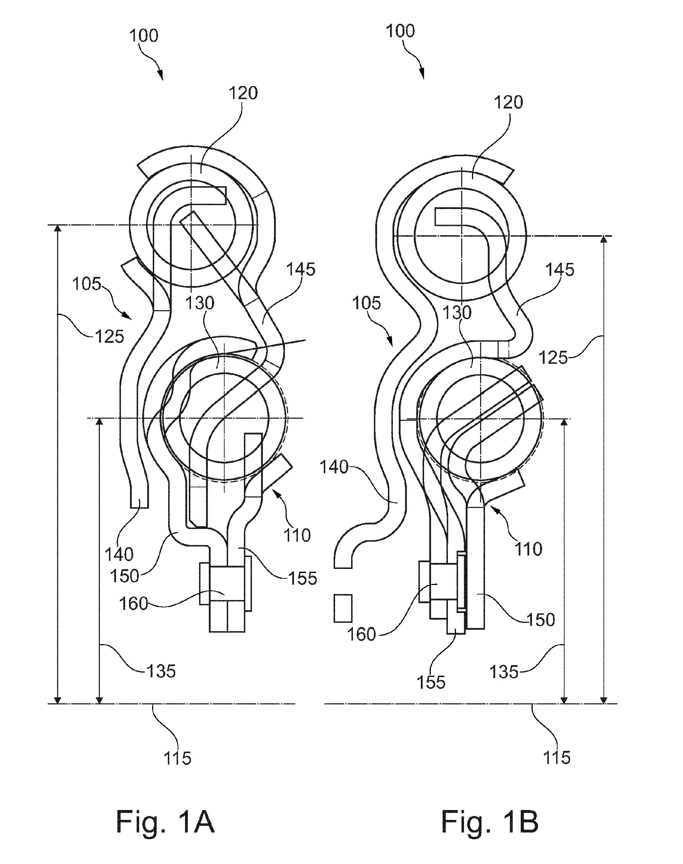

Figur 1 zeigt einen Drehschwingungstilger 100, der insbesondere zum Einsatz in einem Antriebsstrang eines Kraftfahrzeugs eingerichtet ist. In zwei Darstellungen 1A und 1 B sind Ausführungsformen des Drehschwingungstilgers 100 gezeigt, die jeweils zwei in Serie geschaltete elastische Elemente umfassen.

Bezug nehmend auf die linke Darstellung 1A umfasst der Drehschwingungstilger 100 eine Eingangsseite 105 und eine Ausgangsseite 110, wobei ein Drehmomentfluss von der Eingangsseite 105 zur Ausgangsseite 110 oder in umgekehrter Richtung erfolgen kann. Die Eingangsseite 105 und die Ausgangsseite 110 sind bezüglich einer gemeinsamen Drehachse 115 drehbar angeordnet.

Der Drehschwingungstilger 100 umfasst ferner ein äußeres elastisches Element 120, das auf einem ersten Wirkradius 125 bezüglich der Drehachse 115 angeordnet ist, und ein inneres elastisches Element 130, das in einem zweiten Wirkradius 135 zur Drehachse 115 angeordnet ist. Die Wirkradien 125 und 135 sind unterschiedlich zueinander, so dass die elastischen Elemente 120 und 130 zueinander radial versetzt sind. Bevorzugterweise besteht nur ein geringer oder gar kein axialer Versatz zwischen den Federelementen 120 und 130.

Jedes Federelement 120 oder 130 kann mehrere einzelne Federelemente umfassen, die zueinander konzentrisch und/oder in stirnseitiger Anlage angeordnet sein können. Insbesondere können die Federelemente 120, 130 Bogenfedern umfassen, die entlang eines Umfangs um die Drehachse 115 angeordnet sind.

Die Eingangsseite 105 ist durch eine Eingangsscheibe 140 gebildet, die einen Vorsprung umfasst, der stirnseitig, also in Umfangsrichtung, an einem Ende des äußeren elastischen Elements 120 anliegt. An einem entgegengesetzten Ende des äußeren elastischen Elements 120 liegt ein Vorsprung einer Zwischenscheibe 145 an. Die Zwischenscheibe 145 ist so geformt, dass sie als Retainer an der radialen Außenseite des äußeren elastischen Elements 120 anliegt. Radial weiter innen liegt ein Abschnitt der Zwischenscheibe 145 an einer Stirnseite des inneren elastischen Elements 130 an. Ein entgegen gesetztes Ende des inneren elastischen Elements 130 liegt an einem Vorsprung einer Ausgangsscheibe 150 an.

Die Ausgangsscheibe 150 ist mit einer Hilfsscheibe 155 mittels einer Nietverbindung 160 axial verbunden. Ein Abschnitt der Ausgangsscheibe 150 bildet ein radial außen liegendes Anlageelement für das innere elastische Element 130. Die Hilfsscheibe 155 umfasst, ähnlich wie die Ausgangsscheibe 150, einen Vorsprung zur stirnseitigen Anlage am inneren elastischen Element 130.

In der dargestellten Ausführungsform ist außerdem ein radial innen liegendes Ende der Zwischenscheibe 145 an einer radial äußeren Anlagefläche der Ausgangsscheibe 150 gelagert, so dass die Zwischenscheibe 145 bezüglich der Ausgangsscheibe 150 zentriert ist. In einer weiteren Ausführungsform kann die Zwischenscheibe 145 schwimmend gelagert sein, indem sie in axialer Richtung verschiebbar ist.

In der in Figur 1A dargestellten Ausführungsform bildet die Zwischenscheibe 145 einerseits ein radial äußeres Anlageelement für das erste Federelement 120 und andererseits ein Eingriffselement für das zweite Federelement 130. Eine Ausführungsform des Drehschwingungstilgers 100 mit einer umgekehrten Anordnung findet sich in Figur 1B , wo die Zwischenscheibe 145 ein stirnseitiges Anlageelement für das erste Federelement 120 und ein radial äußeres Anlageelement für das zweite Federelement 130 bildet.

Die Hilfsscheibe 155 ist mittels der Nietverbindung 160 an der Zwischenscheibe 145 befestigt und umfasst einen Vorsprung zum stirnseitigen Eingriff mit dem inneren elastischen Element 130. Das entgegen gesetzte Ende des inneren elastischen Elements 130 liegt an einem Vorsprung der Ausgangsscheibe 150 an. Das radial äußere Anlageelement des ersten Federelements 120 ist an der Eingangsscheibe 140 ausgebildet, die als Eingangsseite 105 dient.

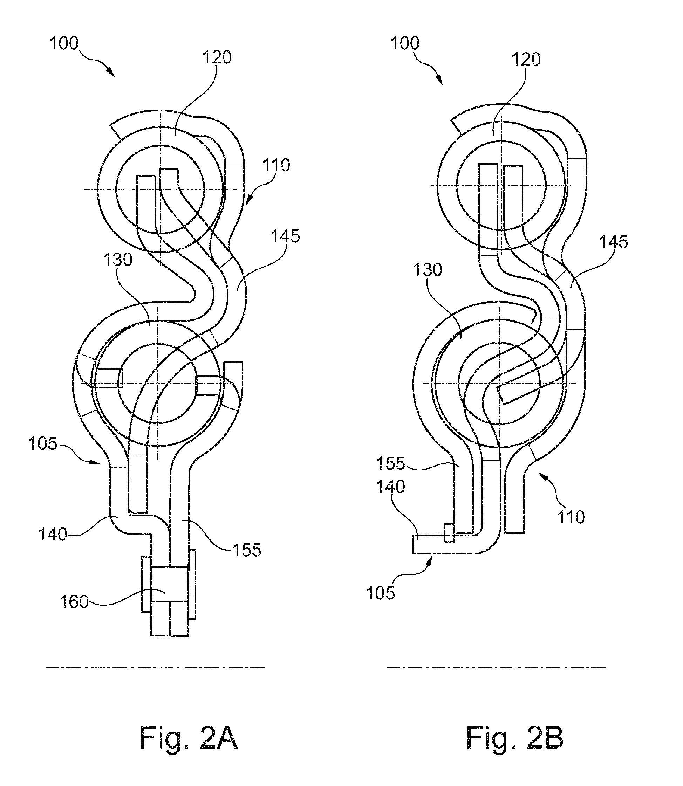

Figur 2 zeigt zwei Darstellungen 2A und 2B mit weiteren Ausführungsformen des Drehschwingungstilgers 100 aus Figur 1, wobei die elastischen Elemente 120 und 130 jeweils funktional parallel geschaltet sind. In der in Figur 2A dargestellten Ausführungsform ist die Eingangsseite 105 durch die Eingangsscheibe 140 und die Ausgangsseite 110 durch die Zwischenscheibe 145 gebildet.

Die Hilfsscheibe 155 ist mittels der Nietverbindung 160 mit der Eingangsscheibe 140 verbunden. Vorsprünge an der Eingangsscheibe 140 und der Hilfsscheibe 155 liegen stirnseitig am zweiten Federelement 130 an. Die Eingangsscheibe 140 ist so geformt, dass sie ein radial äußeres Anlageelement für das innere elastische Element 130 bildet. Ein weiterer Vorsprung der Eingangsscheibe 140 liegt stirnseitig am ersten Federelement 120 an.

Eine entgegengesetzte Seite des äußeren elastischen Elements 120 liegt an einem Vorsprung der Zwischenscheibe 145 an, die gleichzeitig so geformt ist, dass sie ein radial äußeres Anlageelement für das äußere elastische Element 120 bildet. Ein radial inneres Ende der Zwischenscheibe 145 ist axial nach links und radial nach innen an der Eingangsscheibe 140 gelagert. In einer anderen Ausführungsform kann diese Lagerung auch entfallen.

Figur 2B zeigt eine weitere Ausführungsform des Drehschwingungstilgers 100 mit funktional parallel geschalteten ersten und zweiten Federelementen 120, 130, wobei die Eingangsseite 105 durch die Eingangsscheibe 140 und die Ausgangsseite 110 durch die Zwischenscheibe 145 gebildet ist. Die Eingangsscheibe 140 und die Zwischenscheibe 145 umfassen jeweils Vorsprünge zur umfangsseitigen Anlage an einander entgegen gesetzten Enden des ersten Federelements 120 bzw. des zweiten Federelements 130. Ferner bildet die Zwischenscheibe 145 ein radial äußeres Anlageelement für das erste Federelement 120. Ein radial äußeres Anlageelement (Retainer) für das zweite Federelement 130 ist durch die Hilfsscheibe 155 gebildet, die an der Eingangsscheibe 140 zentriert und gegebenenfalls auch schwimmend gelagert ist.

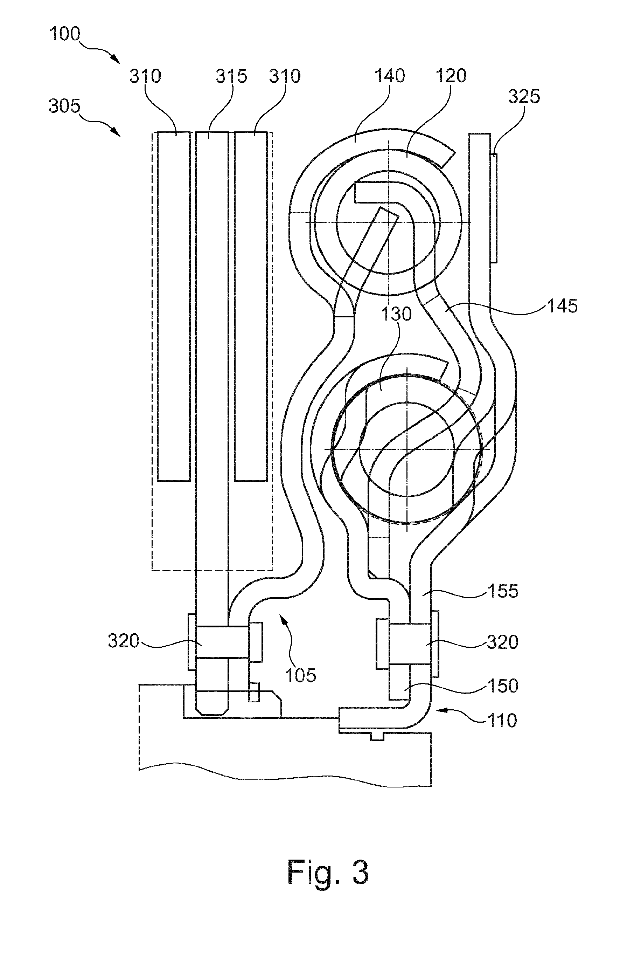

Figur 3 zeigt einen Drehschwingungstilger 100 in einer weiteren Ausführungsform, die auf der in Figur 1A gezeigten Ausführungsform basiert. An der Eingangsseite 105, die durch die Eingangsscheibe 140 gebildet ist, ist zusätzlich ein optionales Fliehkraftpendel 305 angebracht. Das Fliehkraftpendel 305 umfasst zwei Pendelmassen 310, die auf unterschiedlichen axialen Seiten eines Pendelflanschs 315 liegen und gemeinsam bezüglich des Pendelflansches 315 verschiebbar gelagert sind. Das Fliehkraftpendel 305 ist mittels einer Nietverbindung 320 an der Eingangsscheibe 140 befestigt. Die Hilfsscheibe 155 ist optional in radialer Richtung über das innere elastische Element 130 hinaus verlängert und trägt in einem radialen Außenbereich einen Kupplungsbelag 325 einer Reibscheibenkupplung. Im Unterschied zu der in Figur 1A gezeigten Ausführungsform ist das radial außen liegende Anlageelement des ersten Federelements 120 nicht an der Zwischenscheibe 145, sondern an der Eingangsscheibe 140 ausgeformt.

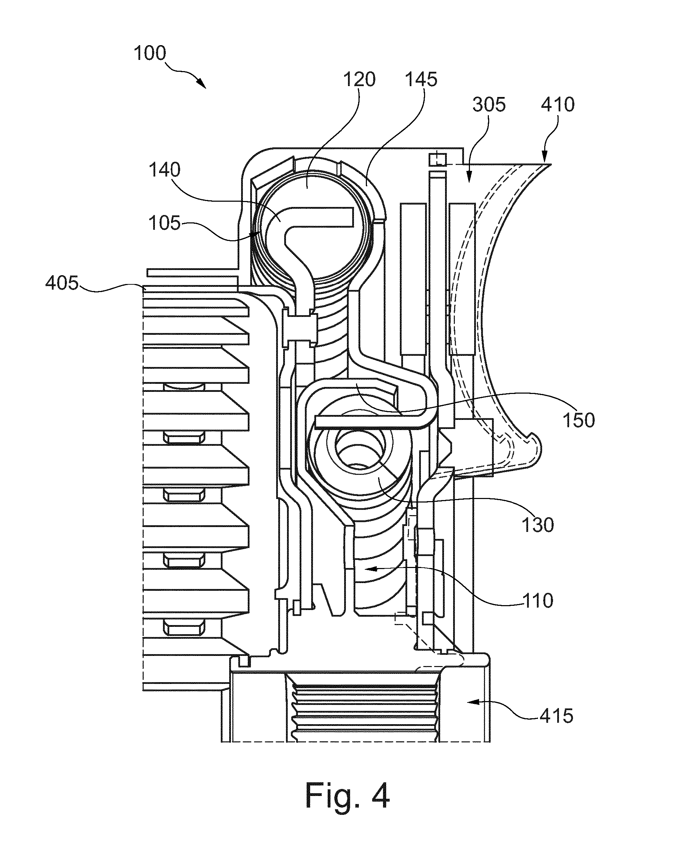

Figur 4 zeigt eine weitere Ausführungsform des Drehschwingungstilgers 100 mit einer Turbine. In der dargestellten Ausführungsform ist die Eingangsseite 105 durch die Eingangsscheibe 140 gebildet, die mit dem dargestellten Kupplungskorb 405 verbunden sein kann. In der dargestellten, bevorzugten Ausführungsform ist außerdem eine Turbine 410, die nur angedeutet dargestellt ist, drehfest mit der Eingangsseite 105 verbunden.

Die Ausgangsseite ist durch die Ausgangsscheibe 150 gebildet, die mit einer Nabe 415 verbunden ist. Die elastischen Elemente 120 und 130 liegen bezüglich der Eingangsseite 105 und der Ausgangsseite 110 in Serie und sind mittels des Zwischenblechs 145 miteinander gekoppelt. Das radial äußere Anlageelement des äußeren elastischen Elements 120 ist durch die Zwischenscheibe 145 und das radial äußere Anlageelement des inneren elastischen Elements 130 durch die Ausgangsscheibe 150 gebildet.

In der dargestellten, bevorzugten Ausführungsform ist das Fliehkraftpendel 305 entsprechend dem aus Figur 3 mit der Ausgangsseite 110 drehfest verbunden.

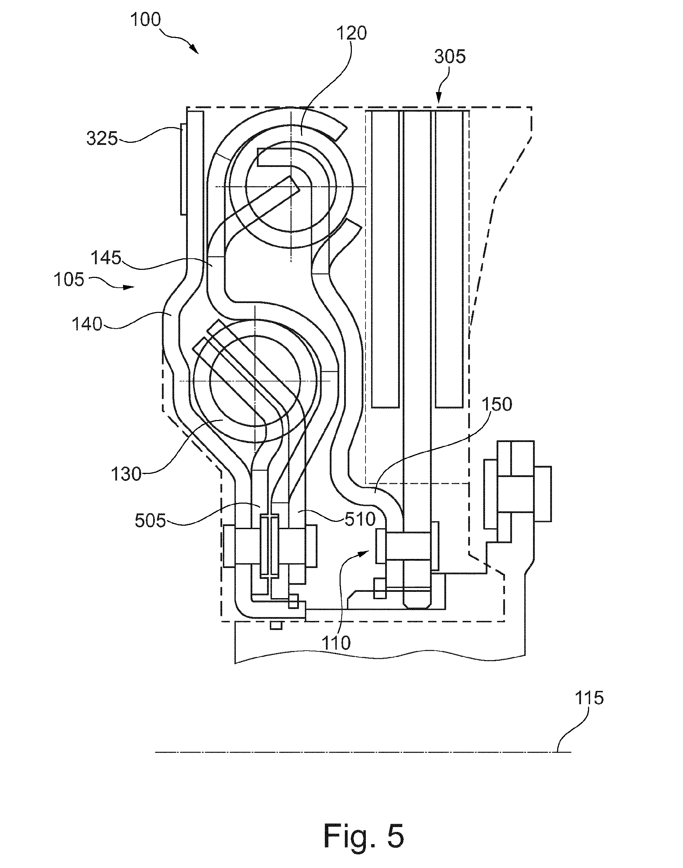

Figur 5 zeigt noch einen weiteren Drehschwingungstilger 100 in einer weiteren Ausführungsform. Das dargestellte Fliehkraftpendel 305 und der Kupplungsbelag 325 entsprechen den oben mit Bezug auf Figur 3 beschriebenen Elementen und sind beide optional.

Die Eingangsseite 105 ist durch die Eingangsscheibe 140 gebildet, die mit einer ersten Hilfsscheibe 505 drehfest verbunden ist. Die erste Hilfsscheibe 505 umfasst einen Vorsprung zur Anlage an einem Ende des inneren elastischen Elements 130 in Umfangsrichtung. Das gegenüberliegende Ende des inneren elastischen Elements 130 liegt an einem Vorsprung einer zweiten Hilfsscheibe 510 an, die mit der Zwischenscheibe 145 drehfest verbunden ist.

Dabei ist die Hilfsscheibe 145 so geformt, dass sie radial außen liegende Anlageelemente sowohl für das äußere elastische Element 120 als auch für das innere elastische Element 130 bildet. Ein Vorsprung der Zwischenscheibe 145 ist außerdem zum Eingriff mit einem Ende des äußeren elastischen Elements 120 eingerichtet. Das gegenüberliegende Ende des äußeren elastischen Elements 120 liegt an einem Vorsprung der Ausgangsscheibe 150 an, die die Ausgangsseite 110 des Drehschwingungstilgers 100 bildet

### Bezugszeichenliste

- 100: Drehschwingungstilger
- 105: Eingangsseite
- 110: Ausgangsseite
- 115: Drehachse
- 120: elastisches Element
- 125: erster Wirkradius
- 130: elastisches Element
- 135: zweiter Wirkradius

- 140: Eingangsscheibe
- 145: Zwischenscheibe
- 150: Ausgangsscheibe
- 155: Hilfsscheibe
- 160: Nietverbindung

- 305: Fliehkraftpendel
- 310: Pendelmasse
- 315: Pendelflansch
- 320: Nietverbindung
- 325: Kupplungsbelag

- 405: Kupplungskorb
- 410: Turbine
- 415: Nabe

- 505: erste Hilfsscheibe
- 510: zweite Hilfsscheibe

## Patentansprüche

1. Drehschwingungstilger (100), umfassend:
- eine Eingangsseite (105) und eine Ausgangsseite (110) mit einer gemeinsamen Drehachse (115);
- ein erstes (120) und ein zweites elastisches Element (130) zur Übertragung von Kräften in Umfangsrichtung zwischen der Eingangsseite (105) und der Ausgangsseite (110);
- wobei die elastischen Elemente (120, 130) auf unterschiedlichen Wirkradien (125, 135) liegen;
**dadurch gekennzeichnet, dass**
- beide elastischen Elemente (120, 130) jeweils mittels eines radial außen liegenden Anlageelements (140, 145, 150, 155) gehalten sind.

2. Drehschwingungstilger (100) nach Anspruch 1, wobei das am ersten elastischen Element (120) radial außen anliegende Anlageelement als Teil einer Zwischenscheibe (145) ausgebildet ist, die das erste elastische Element (120) mit dem zweiten elastischen Element (130) verbindet.

3. Drehschwingungstilger (100) nach Anspruch 2, wobei die Zwischenscheibe (145) ein Eingriffselement zur Anlage am zweiten elastischen Element (130) in Umfangsrichtung umfasst.

4. Drehschwingungstilger (100) nach Anspruch 2, wobei das am zweiten elastischen Element (130) radial außen anliegende Anlageelement als Teil der Zwischenscheibe (145) ausgebildet ist.

5. Drehschwingungstilger (100) nach einem der Ansprüche 2 bis 4, wobei die Zwischenscheibe (145) bezüglich der Drehachse (115) zentriert gelagert ist.

6. Drehschwingungstilger (100) nach einem der Ansprüche 2 bis 4, wobei die Zwischenscheibe (145) bezüglich der Drehachse (115) schwimmend gelagert ist.

7. Drehschwingungstilger (100) nach einem der vorangehenden Ansprüche, wobei das am zweiten elastischen Element (130) anliegende Anlageelement (145, 150, 155) als Teil einer drehfest mit der Eingangs- oder Ausgangsseite (110) verbundenen Eingangs-(140) bzw. Ausgangsscheibe (150) ausgebildet ist.

8. Drehschwingungstilger (100) nach einem der vorangehenden Ansprüche, wobei die elastischen Elemente (120, 130) in Serie zwischen der Eingangsseite (105) und der Ausgangsseite (110) angeordnet sind.

9. Drehschwingungstilger (100) nach einem der vorangehenden Ansprüche, wobei die elastischen Elemente (120, 130) parallel zwischen der Eingangsseite (105) und der Ausgangsseite (110) angeordnet sind.

10. Drehschwingungstilger (100) nach einem der vorangehenden Ansprüche, ferner umfassend ein Fliehkraftpendel (305)
